# FASCICULE DE BREVET EUROPEEN

(11) **EP 2 878 427 B1**
(45) Date de publication et mention de la délivrance du brevet: **07.03.2018**
(21) Numéro de dépôt: 14195167.3
(22) Date de dépôt: 27.11.2014
(51) Int. Cl.: B29C 51/26, B32B 37/14, B32B 37/10, B32B 37/12

(54) **Procédé de fabrication d'une pièce en matériau sandwich et pièce réalisée suivant un tel procédé**
Herstellungsverfahren eines Bauteils aus Sandwich-Material, und nach diesem Verfahren hergestelltes Bauteil
Method for manufacturing a part made of sandwich material and part manufactured according to such a method

(30) Priorité: 29.11.2013 FR 1302787
(43) Date de publication de la demande: 03.06.2015
(73) Titulaire: EURO-SHELTER, 78000 Versailles (FR)
(72) Inventeur: Lucas, Didier, 18023 Bourges Cedex (FR); Picaut, Gwénaël, 18023 Bourges Cedex (FR)
(74) Mandataire: Chaillot, Geneviève

(56) Documents cités:
- WO-A1-02/052208
- WO-A1-2011/096935
- WO-A2-2006/084117
- DE-A1- 3 447 967
- DE-A1- 3 838 866

## Description

Le domaine technique de l'invention est celui des pièces en matériau sandwich (ou pièces sandwiches) associant au moins deux feuilles d'un matériau thermoplastique séparées par une âme d'un matériau de renfort ainsi que des procédés de fabrication de telles pièces.

On connaît par le brevet WO2011/058514 un procédé de fabrication de pièces non planes pour l'aéronautique (hublots d'aéronef) qui sont formées de deux peaux de matériau thermoplastique séparées par une âme de renfort, également en matériau thermoplastique.

Ces pièces sont mises en forme à chaud et sous vide entre un moule et un contre moule. Les matériaux mis en oeuvre sont ramollis par la température. La compression qui est assurée par le moule et le vide permet d'obtenir la mise en forme souhaitée.

Ce procédé est particulièrement intéressant mais il est cependant limité à la réalisation de pièces intégralement réalisées en matériaux thermoplastiques (peaux et coeur).

Par ailleurs ce procédé est complexe et coûteux. Le moule est associé à un contre moule, tous deux pilotés à la fois en température et en niveau de vide.

On connaît par le brevet WO02/052208 un procédé de fabrication d'une structure isolante thermique mise en oeuvre, par exemple, pour réaliser les réfrigérateurs, et comprenant deux parois délimitant un espace recevant un matériau isolant, ledit espace étant soumis au vide après mise en place du matériau isolant. Chaque paroi consiste en une structure de type sandwich comprenant deux feuilles d'un matériau thermoplastique séparées par un simple film de contrôle de l'étanchéité aux gaz. Les feuilles sont mises en forme à chaud et sous vide entre un moule et un contre-moule et le film est inséré entre les feuilles chauffées pendant la mise en forme de ces dernières afin d'y adhérer.

On connaît par le brevet DE3838866 un procédé de fabrication d'une pièce, en particulier un aileron de véhicule, comprenant deux coquilles en plastique durcissable et fibres de verre entre lesquelles sont reçus des renforts longitudinaux et transversaux ainsi qu'une mousse. Les coquilles sont mises en forme par chauffage sous vide puis polymérisation aux Ultraviolets. Une mousse Polyuréthane est injectée entre les coquilles pour assurer leur solidarisation.

On connaît par le brevet DE3447967 un procédé de fabrication d'une planche à voile comprenant une coque en matériau thermoplastique et un noyau en polystyrène expansé, procédé dans lequel deux feuilles d'un matériau thermoplastique sont disposées dans un moule comprenant deux parties, le moule est chauffé et les feuilles sont aspirées de façon à leur donner la forme souhaitée. Le noyau de mousse, qui a été préalablement usiné à la forme souhaitée, est ensuite positionné, puis les coques sont comprimées autour du noyau afin de les solidariser.

On connaît enfin par le brevet WO2006/084117 un procédé de fabrication d'une pièce en matériau sandwich selon le préambule de la revendication 1, comprenant deux feuilles de matériau synthétique thermoplastique séparées par une âme en nid d'abeille de matériau thermoplastique, lequel procédé comprend l'application de couches d'adhésif aux feuilles et/ou à l'âme, la disposition de chacune des feuilles contre une plaque de moule et de l'âme entre les feuilles, le chauffage du moule et l'application d'une pression afin de consolider les couches entre elles, et le refroidissement de la pièce ainsi formée avant son démoulage.

Ces procédés sont cependant également limités à la fabrication de pièces intégralement réalisées en matériaux thermoplastiques, et sont coûteux, le moule définitif ayant encore besoin d'être piloté à la fois en température et en niveau de vide.

On sait par ailleurs réaliser par thermo-soufflage des pièces en matériaux thermoplastiques pour réaliser par exemple des capotages ou des pièces de carrosserie de véhicules. Ces pièces ont une épaisseur de 5 à 8 mm elles sont relativement lourdes tout en ayant une résistance mécanique limitée.

Il existe aujourd'hui un besoin de réaliser des pièces sandwiches à moindre coût pour l'automobile ou les véhicules terrestres, aériens ou navals. Ces pièces doivent par ailleurs être légères et avoir des caractéristiques mécaniques intéressantes.

C'est le but de l'invention que de proposer un procédé particulièrement simple et facile à mettre en oeuvre permettant la fabrication de pièces en matériau sandwich qui soient plus légères et plus résistantes que les pièces thermoplastiques existantes.

L'invention permet par ailleurs de réaliser des pièces en matériau sandwich ayant un profil en trois dimensions plus ou moins complexe.

Ainsi l'invention a pour objet un procédé de fabrication d'une pièce en matériau sandwich comprenant au moins deux feuilles d'un matériau synthétique thermo-plastique séparées par une âme d'au moins une couche d'un matériau de renfort, le procédé comprenant une première étape d'encollage d'une première feuille et/ou d'une face de l'âme de matériau de renfort, une première étape de positionnement de l'âme de matériau de renfort sur la première feuille placée sur un moule, une seconde étape d'encollage de la seconde feuille et/ou d'une autre face de l'âme de matériau de renfort, une seconde étape de positionnement de la seconde feuille sur l'âme de matériau de renfort, et une étape de démontage de la pièce en matériau sandwich, procédé caractérisé par les étapes suivantes :
- on réalise au préalable par thermoformage les deux feuilles de matériau thermoplastique renforcé ou non et ayant sensiblement le même profil,
- on prépare par ailleurs au préalable l'âme souple comprenant au moins une couche d'un matériau de renfort,
- dans la première étape d'encollage, on positionne la première feuille sur un moule ayant une forme complémentaire de la première feuille,
- après la seconde étape de positionnement, on applique un effort déterminé et réparti de façon homogène sur la seconde feuille pour réaliser une déformation mécanique et une mise en forme de l'âme de matériau de renfort,
- on maintient cet effort jusqu'à polymérisation de la colle, puis l'on procède à l'étape de démontage.

Une répartition homogène de l'effort permet de réaliser tout à la fois la déformation mécanique et la mise en forme de l'âme du matériau de renfort.

Selon un mode particulier de réalisation, la seconde feuille pourra être fixée sur un contre-moule ayant une forme complémentaire de la seconde feuille.

La seconde feuille pourra être rendue solidaire du contre-moule par un moyen à aspiration.
Selon un autre mode de réalisation, la seconde feuille pourra être appliquée contre l'âme par une poche dans laquelle on réalisera le vide.

Avantageusement, les feuilles pourront être réalisées par thermoformage-soufflage.

C'est aussi un but de l'invention que de proposer une pièce en matériau sandwich à la fois très légère et très résistante et réalisable à moindre coût.

La pièce en matériau sandwich selon l'invention comporte deux feuilles d'un matériau synthétique thermo-plastique séparées par une âme comportant au moins une couche d'un matériau de renfort, cette pièce est caractérisée en ce que l'âme est une âme souple comportant au moins une couche d'un des matériaux suivants : nid d'abeille métallique, mousse rainurée, liège rainuré, balsa rainuré, picots liés à un support souple.

Selon un mode particulier de réalisation, chaque feuille pourra comporter un rebord périphérique, le rebord d'une feuille s'emboîtant dans le rebord de l'autre feuille de façon à former une bordure pour la pièce.

L'âme pourra avoir une épaisseur comprise entre 3 mm et 60 mm.

Les feuilles pourront avoir une épaisseur comprise entre 0,2 mm et 3 mm.

Selon des modes particuliers de réalisation, le profil des feuilles pourra ne pas être plan.

L'invention sera mieux comprise à la lecture de la description qui va suivre de modes particuliers de réalisation, description faite en référence aux dessins annexés et dans lesquels :
- les figures 1a et 1b montrent respectivement une coupe transversale AA et une vue de dessus d'une pièce sandwich selon l'invention, la trace du plan de coupe AA étant repérée sur la figure 1b ;
- les figures 2a et 2b montrent un premier exemple d'une âme utilisable pour la pièce sandwich selon l'invention ;
- les figures 3a et 3b montrent un deuxième exemple d'une âme utilisable pour la pièce sandwich selon l'invention ;
- les figures 4a et 4b montrent un troisième exemple d'une âme utilisable pour la pièce sandwich selon l'invention ;
- la figure 5 schématise les différentes étapes du procédé selon un mode de réalisation de l'invention ;
- la figure 6 schématise d'autres étapes du procédé selon un autre mode de réalisation de l'invention ;
- la figure 7a montre de façon schématique en coupe transversale une autre pièce sandwich selon l'invention, pièce comportant une bordure ;
- la figure 7b montre seule et en coupe la deuxième feuille de la pièce sandwich selon la figure 7a ;
- la figure 8a montre en coupe transversale une pièce sandwich selon l'invention bordurée et ayant un profil plan ; et
- la figure 8b montre les composants de la pièce selon la figure 8a avant assemblage.

En se reportant aux figures la et 1b, une pièce sandwich 1 selon un mode de réalisation de l'invention est ici une pièce non plane. La forme sandwich de la pièce 1 s'étend suivant les trois dimensions de l'espace. On a représenté ici une pièce 1 en forme de cuvette sensiblement carrée et arrondie, à la fois sur ses quatre sommets la et au niveau de son fond 1b.

Il s'agit d'un exemple qui n'a rien de limitatif et qui permet d'expliquer à la fois les différentes structures possibles pour la pièce selon l'invention et les différentes étapes du procédé selon l'invention.

La pièce 1 est une pièce sandwich qui comporte deux feuilles 2a et 2b d'un matériau thermo-plastique, feuilles qui sont séparées par une âme 3 d'un matériau de renfort.

Les matériaux synthétiques thermoplastiques sont des matériaux qui peuvent se ramollir au-dessus d'une certaine température et qui durcissent après refroidissement. Ce phénomène est réversible et le matériau est recyclable.

Comme matériau thermoplastique on pourra choisir par exemple le polycarbonate, le polyéthylène, le polyamide, le polyester, le polystyrène, l'acrylonitrile butadiène styrène (ou ABS).

On pourra en particulier mettre en oeuvre le polycarbonate qui sera mis en forme par la technique du thermoformage-soufflage.

Cette technique est bien connue de l'Homme du Métier et il n'est donc pas nécessaire de la décrire en détails. Elle permet de réaliser des pièces minces de formes très diverses tout en conservant une épaisseur de feuille qui reste homogène sur l'ensemble de la pièce. D'autres techniques telles que le moulage pourraient bien sûr être utilisées.

Les feuilles mises en oeuvre pourront avoir une épaisseur réduite, comprise entre 0,2 mm et 3 mm. Il n'est en effet pas nécessaire avec l'invention de mettre en oeuvre des feuilles très épaisses car le matériau thermoplastique est associé à une âme 3 qui confèrera de la rigidité à la pièce sandwich réalisée.

On pourra à titre de variante réaliser des feuilles 2a et 2b en matériau thermoplastique renforcé, par exemple par des fibres de verre ou de carbone.

L'âme 3 est collée entre les deux feuilles 2a et 2b et elle a un profil qui suit toutes les courbures des feuilles 2a,2b. L'âme pourra avoir une épaisseur comprise entre 3 mm et 60 mm en fonction de la rigidité souhaitée pour la pièce. L'âme aura une souplesse relative lui permettant d'épouser après déformation les profils courbes des feuilles.

Un des avantages de l'invention est que l'âme 3 peut être réalisée en des matériaux très divers et qui ne sont pas eux même thermoplastiques.

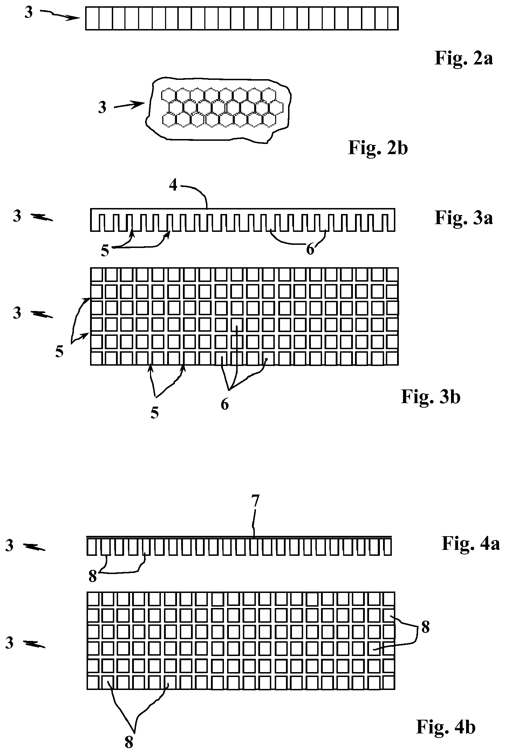

Les figures 2a et 2b montrent par exemple une âme 3 réalisée en nid d'abeille. Le nid d'abeille pourra être formé comme représenté par des cellules hexagonales. Il pourrait également être formé par des tubes cylindriques maintenus entre deux peaux minces.

Le nid d'abeille de l'âme 3 pourra être en aluminium. Le nid d'abeille a une souplesse suffisante pour lui permettre de suivre les profils courbes des feuilles 2a,2b.

Les figures 3a et 3b montrent un autre exemple d'un matériau utilisable pour réaliser l'âme 3 de la pièce. Cette âme 3 est formée ici d'une plaque 4 qui porte des rainures 5 formant un quadrillage. Les rainures délimitent des picots 6 sensiblement carrés. La profondeur des rainures 5 est égale à au moins 70% de l'épaisseur de la plaque 4. Il en résulte une souplesse pour la plaque 4 qui permet son adaptation aux profils courbes des feuilles 2a et 2b du sandwich.

La plaque rainurée 4 pourra être réalisée en une mousse synthétique, telle que du polystyrène extrudé, du polychlorure de vinyle (ou PVC), du Polyuréthane... La plaque rainurée 4 pourra également être réalisée en liège ou en balsa.

Les figures 4a et 4b montrent un autre exemple d'un matériau utilisable pour réaliser l'âme 3 de la pièce.
Ce matériau est formé de picots 8 qui sont tous solidaires d'un support 7 souple (par exemple par collage). Ce mode de réalisation permet d'obtenir une âme 3 ayant une souplesse encore supérieure à celle du mode des figures 3a,3b. La partie assurant l'intégrité de l'âme avant montage est en effet constituée ici par le support souple 7 qui est par exemple une nappe en tissu ou en matériau synthétique non tissé, ou encore une feuille ou film de polyéthylène. Le support 7 a une épaisseur qui ne dépasse pas quelques dixièmes de millimètres.

Les picots 8 pourront être réalisés en balsa, en matière plastique thermoplastique ou thermodurcissable. Les picots pourront par exemple être formé par des tubes cylindriques de PVC (polychlorure de vinyle), ou bien être constitués par une mousse d'un matériau thermoplastique ou thermodurcissable (polystyrène extrudé, PVC, Polyuréthane...) .

Dans tous les cas l'âme 3 sera définie de façon à avoir une souplesse lui permettant de suivre si nécessaire les profils courbes des feuilles thermoplastiques.

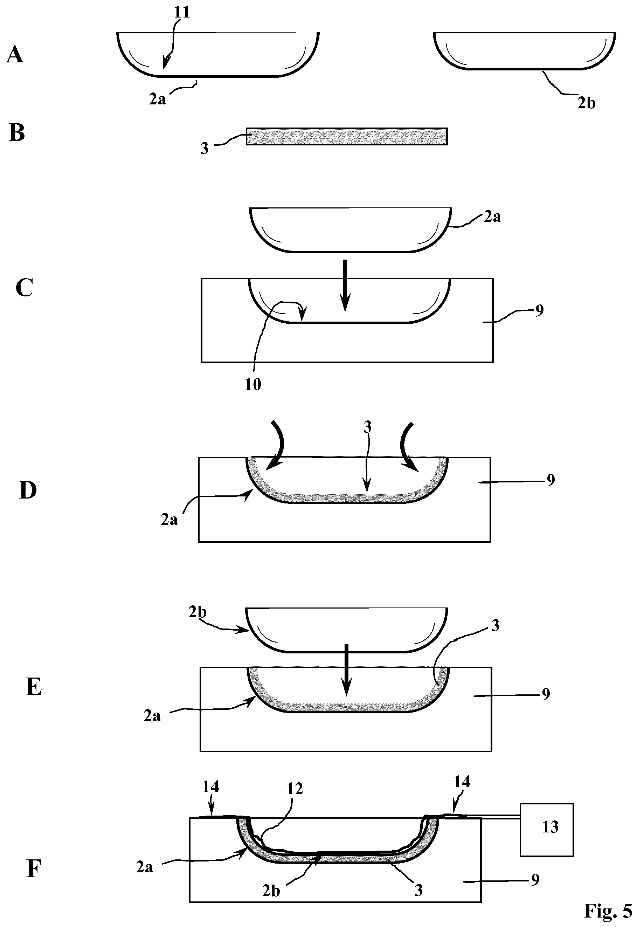

La figure 5 schématise les différentes étapes du procédé selon un mode de réalisation de l'invention.

La pièce qui est fabriquée est la cuvette 1 représentée aux figures la et 1b.

Au cours d'une première étape A on va réaliser par thermoformage deux feuilles 2a et 2b d'un matériau thermoplastique, renforcé ou non, et ayant sensiblement le même profil (ici un profil non plan).

Les feuilles 2a et 2b, si elles ont un profil semblable, ont bien entendu des dimensions légèrement différentes pour tenir compte de la géométrie finale de la pièce 1 et en particulier de l'épaisseur de l'âme 3.

On prépare par ailleurs (étape B) une âme 3 comprenant au moins une couche d'un matériau de renfort. On entend par préparation la découpe de l'âme 3 sensiblement aux dimensions de la pièce à réaliser.

On positionne ensuite (étape C) la première feuille 2a sur un moule 9 ayant une forme complémentaire de la première feuille 2a. Le moule 9 est représenté en coupe sur la figure. Il comporte une cavité 10 qui correspond au profil de la première feuille 2a.

On encolle ensuite la face interne 11 de la première feuille 2a.

Puis on positionne (étape D) l'âme 3 de matériau de renfort sur la première feuille 2a encollée et placée dans le moule 9.

Alternativement il serait possible d'encoller une face de l'âme 3 de matériau de renfort.

Le positionnement de l'âme 3 sur la première feuille est facilité par la souplesse de l'âme 3 qui est utilisée. L'âme 3 peut pratiquement suivre le profil de la première feuille. On peut compléter au cours de cette étape la découpe de l'âme 3.

On encolle ensuite la seconde feuille 2b et/ou l'autre face de l'âme 3 de matériau de renfort.
On positionne (étape E) la seconde feuille 2b sur l'âme 3 de matériau de renfort.

On applique enfin (étape F) un effort déterminé et réparti de façon homogène sur la seconde feuille 2b pour réaliser une déformation mécanique et une mise en forme de l'âme 3 du matériau de renfort.

On maintient cet effort jusqu'à polymérisation de la colle. On démonte enfin la pièce sandwich 1 réalisée.

Suivant le mode de réalisation représenté à la figure 5, la seconde feuille 2b est appliquée contre l'âme 3 par une poche 12 souple dans laquelle on réalise un certain niveau de vide à l'aide d'une pompe 13. L'effort de compression est dosé en jouant sur le niveau de vide réalisé. La poche 12 est rendue solidaire du moule 9 par des rubans adhésifs 14. La répartition de l'effort est homogène car c'est la pression atmosphérique qui agit sur toute la surface de la poche, donc d'une façon uniformément répartie.

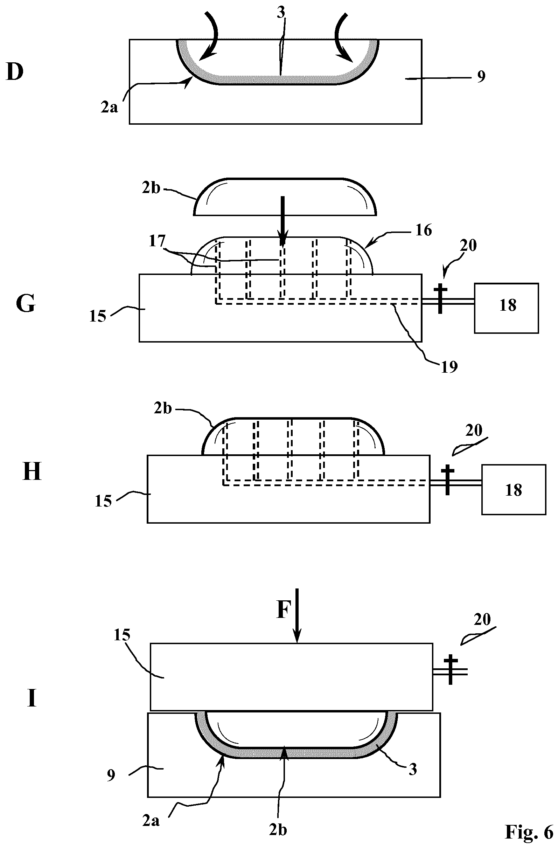

La figure 6 montre une variante du procédé selon l'invention dans laquelle la seconde feuille 2b est positionnée (étape G) sur un contre-moule 15 ayant une forme 16 qui est complémentaire du profil de la seconde feuille 2b.

La seconde feuille 2b est ensuite (étape H) rendue solidaire du contre moule 15 par un moyen de liaison temporaire qui sera avantageusement un moyen à aspiration 17,18.

A cet effet la forme 16 du contre moule 15 est percée de trous 17, régulièrement répartis sur toute la surface de la forme 16, et qui sont reliés à une pompe à vide 18 par l'intermédiaire d'une canalisation 19 interne au contre moule 15. Du fait de la légèreté de la seconde feuille 2b, la dépression nécessaire au maintien de celle-ci est modérée. La pompe 18 pourra être stoppée et le niveau de dépression sera maintenu par la fermeture d'un robinet 20.

On encolle ensuite la seconde feuille 2b et/ou l'autre face de l'âme 3 de matériau de renfort, âme qui est positionnée au préalable dans le moule 9 contre la première feuille 2a (étape D).

On retourne ensuite le contre moule 15 à l'aide de moyens de manutention (non représentés). Le retournement est facilité par la déconnexion de la pompe à vide 18.

On positionne enfin (étape I) le contre moule 15 contre le moule 9 qui a reçu au préalable la première feuille 2a et l'âme de renfort 3. Les étapes A à D ont donc été conduites comme dans le mode de réalisation précédent.

On applique enfin un effort F sur le contre moule 15. Cet effort se trouve, par la forme du contre moule, réparti de façon homogène sur la seconde feuille 2b et permet de réaliser la déformation mécanique et la mise en forme de l'âme 3 du matériau de renfort.

On maintient cet effort jusqu'à polymérisation de la colle. On démonte enfin la pièce sandwich 1 réalisée.

Différentes variantes sont possibles sans sortir du cadre de l'invention.

Il est possible tout d'abord de réaliser une pièce sandwich ayant un profil plan, délimité ou non par une bordure. Ce mode de réalisation sera décrit par la suite.

Il est possible également de mettre en oeuvre une âme 3 formée de plusieurs couches de matériau de renfort souple. Cette variante sera utile lorsque la forme des feuilles 2a,2b est particulièrement complexe. Chaque couche de l'âme aura individuellement une souplesse plus grande que celle de l'âme complète. On réitèrera donc plusieurs fois l'étape D de façon à positionner successivement chaque couche de renfort encollée avant de placer la deuxième feuille 2b.

On peut avec le procédé selon l'invention réaliser des formes très variées associant les parties courbes et les parties planes. Il est ainsi possible de réaliser des panneaux d'habillage de véhicules terrestres particulièrement résistants, mais aussi des équipements internes (mobilier, sièges...) .

L'invention permet de tirer avantage des procédés classiques de thermoformage des feuilles thermoplastiques qui sont très répandus. Il est ainsi possible d'approvisionner les feuilles à moindre coût. Grâce à la mise en oeuvre d'âmes formées de couches souples, il devient ensuite possible avec un outillage peu coûteux de réaliser des pièces et des panneaux à la fois très légers et très résistants.

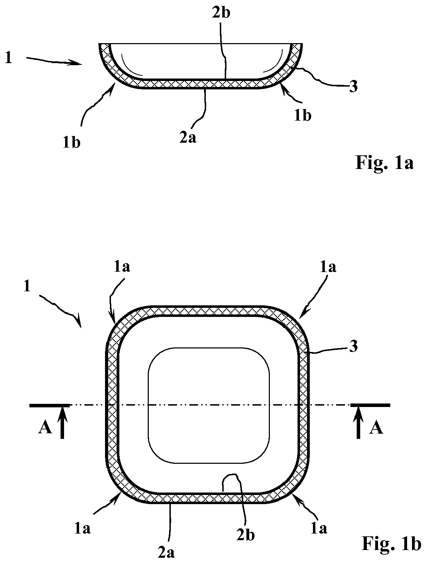

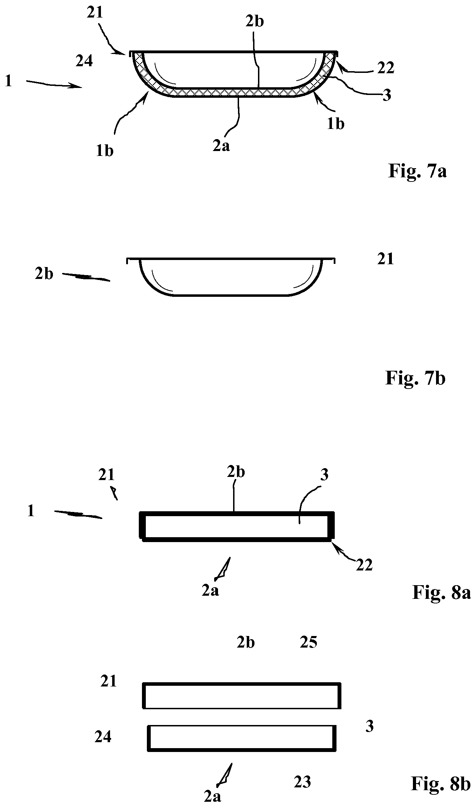

La figure 7a montre une pièce sandwich analogue à celle de la figure 1 dont elle ne diffère que par la présence au niveau de la deuxième feuille 2b d'un rebord périphérique 21. Lors de l'assemblage des deux feuilles 2a et 2b avec l'âme 3 le rebord 21 couvre un rebord supérieur 24 de la première feuille 2a et assure ainsi le bordurage de la pièce 1 en couvrant l'âme 3.

Il suffit éventuellement de mettre en place après collage un cordon d'étanchéité 22 le long du rebord 21 qui ferme de façon étanche la pièce 1. On pourra par exemple réaliser le cordon 22 avec un mastic silicone.

La figure 7b montre, pour plus de précision, la deuxième feuille 2b seule et avant l'assemblage de la pièce 1.

La figure 8a montre un autre mode de réalisation d'une pièce sandwich 1 selon l'invention, pièce représentée en coupe transversale et qui a un profil général parallélépipédique.

La figure 8b montre les différentes parties de cette pièce 1 avant leur assemblage.

La pièce 1 a ici un profil plan. La première feuille 2a est conformée en une cuvette rectangulaire qui a un fond 23 plan entouré par un rebord périphérique rectangulaire 24.

La seconde feuille 2b a elle aussi un fond 25 plan qui est entouré par un rebord périphérique rectangulaire 21.

Les profils des deux pièces 2a et 2b sont définis de façon à pouvoir emboîter le rebord 24 de la première feuille 2a dans le rebord 21 de la deuxième feuille 2b.

Ainsi la largeur et la longueur de la première feuille 2a sont légèrement inférieures à celles de la seconde feuille 2b.

Comme dans le mode de réalisation précédemment décrit, l'âme 3 est collée à la première feuille 2a ou à la deuxième feuille 2b avant assemblage sous vide de la pièce 1. Les matériaux permettant de réaliser l'âme 3 pourront être choisis parmi les matériaux listés précédemment.

Comme pour la pièce selon la figure 7a, le rebord 21 forme une bordure pour la pièce 1. Il assure la protection de l'âme 3. Un cordon d'étanchéité 22 pourra être appliqué le long du rebord 21 pour fermer de façon étanche la pièce 1. On pourra par exemple réaliser le cordon 22 avec un mastic silicone.

## Revendications

1. Procédé de fabrication d'une pièce en matériau sandwich comprenant au moins deux feuilles (2a,2b) d'un matériau synthétique thermo-plastique séparées par une âme (3) d'au moins une couche d'un matériau de renfort, le procédé comprenant une première étape d'encollage d'une première feuille (2a) et/ou d'une face de l'âme (3) de matériau de renfort, une première étape de positionnement de l'âme (3) de matériau de renfort sur la première feuille (2a) placée sur un moule (9), une seconde étape d'encollage de la seconde feuille (2b) et/ou d'une autre face de l'âme (3) de matériau de renfort, une seconde étape de positionnement de la seconde feuille (2b) sur l'âme (3) de matériau de renfort, et une étape de démontage de la pièce en matériau sandwich (1), procédé ***caractérisé par*** les étapes suivantes :
- on réalise au préalable par thermoformage les deux feuilles (2a,2b) de matériau thermoplastique renforcé ou non et ayant sensiblement le même profil,
- on prépare par ailleurs au préalable l'âme souple (3) comprenant au moins une couche d'un matériau de renfort,
- dans la première étape d'encollage, on positionne la première feuille (2a) sur un moule (9) ayant une forme complémentaire de la première feuille (2a),
- après la seconde étape de positionnement, on applique un effort déterminé et réparti de façon homogène sur la seconde feuille (2b) pour réaliser une déformation mécanique et une mise en forme de l'âme (3) de matériau de renfort,
- on maintient cet effort jusqu'à polymérisation de la colle, puis l'on procède à l'étape de démontage.

2. Procédé de fabrication d'une pièce en matériau sandwich selon la revendication 1, **caractérisé en ce que** la seconde feuille (2b) est fixée sur un contre-moule (15) ayant une forme complémentaire de la seconde feuille (2b).

3. Procédé de fabrication d'une pièce en matériau sandwich selon la revendication 2, **caractérisé en ce que** la seconde feuille (2b) est rendue solidaire du contre-moule (15) par un moyen à aspiration (17,18).

4. Procédé de fabrication d'une pièce en matériau sandwich selon la revendication 1, **caractérisé en ce que** la seconde feuille (2b) est appliquée contre l'âme (3) par une poche (12) dans laquelle on réalise le vide.

5. Procédé de fabrication d'une pièce en matériau sandwich selon une des revendications 1 à 4, **caractérisé en ce que** les feuilles (2a,2b) sont réalisées par thermoformage-soufflage.

6. Pièce en matériau sandwich (1) réalisée suivant le procédé selon une des revendications précédentes et comportant deux feuilles (2a,2b) d'un matériau synthétique thermo-plastique séparées par une âme (3) comportant au moins une couche d'un matériau de renfort, pièce ***caractérisée en ce* que** l'âme (3) est une âme souple comportant au moins une couche d'un des matériaux suivants : nid d'abeille métallique, mousse rainurée, liège rainuré, balsa rainuré, picots liés à un support souple.

7. Pièce en matériau sandwich selon la revendication 6, **caractérisée en ce que** chaque feuille (2a,2b) comporte un rebord périphérique (21,24), le rebord d'une feuille (24) s'emboîtant dans le rebord (21) de l'autre feuille de façon à former une bordure pour la pièce (1).

8. Pièce en matériau sandwich selon une des revendications 6 ou 7, **caractérisée en ce que** l'âme (3) a une épaisseur comprise entre 3 mm et 60 mm.

9. Pièce en matériau sandwich selon une des revendications 6 à 8, **caractérisée en ce que** les feuilles (2a,2b) ont une épaisseur comprise entre 0,2 mm et 3 mm.

10. Pièce en matériau sandwich selon une des revendications 6 à 9, **caractérisée en ce que** le profil des feuilles (2a,2b) n'est pas plan.

## Patentansprüche

1. - Herstellungsverfahren eines Bauteils aus Sandwich-Material, das mindestens zwei Folien (2a,2b) aus einem thermoplastischen Kunststoff umfasst, getrennt durch einen Kern (3) mindestens einer Schicht eines Verstärkungsmaterials, wobei das Verfahren folgendes umfasst: eine erste Verklebungsphase einer ersten Folie (2a) und/oder einer Seite des Kerns (3) aus Verstärkungsmaterial, eine erste Positionierungsphase des Kerns (3) aus Verstärkungsmaterial auf der ersten Folie (2a) platziert auf einer Form (9), eine zweite Verklebungsphase der zweiten Folie (2b) und/oder einer anderen Seite des Kerns (3) aus Verstärkungsmaterial, eine zweite Positionierungsphase der zweiten Folie (2b) auf dem Kern (3) aus Verstärkungsmaterial, und eine Demontagephase des Bauteils aus Sandwich-Material (1), wobei das Verfahren durch die folgenden Schritte ***gekennzeichnet ist:***
- man verwirklicht vorab durch Thermoformen die beiden Folien (2a, 2b) aus Thermoplastmaterial, verstärkt oder nicht, die im wesentlichen dasselbe Profil haben,
- man bereitet außerdem vorab den flexiblen Kern (3) vor, der mindestens eine Schicht eines Verstärkungsmaterials umfasst,
- in der ersten Verklebungsphase positioniert man die erste Folie (2a) auf einer Form (9), die eine komplementäre Form zur ersten Folie (2a) hat,
- nach der zweiten Positionierungsphase wird eine bestimmte Kraft gleichmäßig verteilt auf die zweite Folie (2b) ausgeübt, zwecks einer mechanischen Verformung und einer Formgebung des Kerns (3) aus Verstärkungsmaterial,
- man behält diese Kraft bei bis zur Polymerisation des Klebstoffs, dann folgt die Demontagephase.

2. - Herstellungsverfahren eines Bauteils aus Sandwich-Material nach Anspruch 1, **gekennzeichnet dadurch, dass** die zweite Folie (2b) auf einer Gegenform (15) mit einer komplementären Form zur zweiten Folie (2b) befestigt wird.

3. - Herstellungsverfahren eines Bauteils aus Sandwich-Material nach Anspruch 2, **gekennzeichnet dadurch, dass** die zweite Folie (2b) an der Gegenform (15) durch ein Saugmittel (17,18) fest verbunden ist.

4. - Herstellungsverfahren eines Bauteils aus Sandwich-Material nach Anspruch 1, **gekennzeichnet dadurch dass** die zweite Folie (2b) gegen den Kern (3) angelegt wird, und zwar durch eine Tasche (12), in der man ein Vakuum herstellt.

5. - Herstellungsverfahren eines Bauteils aus Sandwich-Material nach einem der Ansprüche 1 bis 4, **gekennzeichnet dadurch dass** die Folien (2a, 2b) durch Blas-Warmformen hergestellt werden.

6. - Bauteil aus Sandwich-Material (1), hergestellt nach dem Verfahren nach einem der vorherigen Ansprüche, und mit zwei Folien (2a,2b) aus einem thermoplastischen Kunststoff, getrennt durch einen Kern (3) mit mindestens einer Schicht eines Verstärkungsmaterials, wobei das Bauteil ***dadurch gekennzeichnet ist,* dass** der Kern (3) ein flexibler Kern mit mindestens einer Schicht eines der folgenden Materialien ist: Metallwabe, gerippter Schaumstoff, gerippter Kork, geripptes Balsaholz, Noppen, die mit einem flexiblen Träger verbunden sind.

7. - Bauteil aus Sandwich-Material nach Anspruch 6, **dadurch gekennzeichnet, dass** jede Folie (2a, 2b) einen peripheren Rand umfasst (21,24), wobei der Rand einer Folie (24) sich in den Rand (21) der anderen Folie einfügt, um einen Rand für das Bauteil (1) zu bilden.

8. - Bauteil aus Sandwich-Material nach einem der Ansprüche 6 oder 7, **dadurch gekennzeichnet, dass** der Kern (3) eine Dicke zwischen 3 mm und 60 mm hat.

9. - Bauteil aus Sandwich-Material nach einem der Ansprüche 6 bis 8, **dadurch gekennzeichnet, dass** die Folien (2a, 2b) eine Dicke zwischen 0,2 mm und 3 mm haben.

10. - Bauteil aus Sandwich-Material nach einem der Ansprüche 6 bis 9, **dadurch gekennzeichnet, dass** das Profil der Folien (2a, 2b) nicht eben ist.

## Claims

1. - A method for manufacturing a part made of sandwich material comprising at least two sheets (2a, 2b) made of a thermoplastic synthetic material and separated by a core (3) made of at least one layer of reinforcement material, the method comprising a first step of pasting a first sheet (2a) and/or a face of the core (3) of reinforcement material, a first step of positioning the core (3) of reinforcement material on the first sheet (2a) arranged on a mould (9), a second step of pasting the second sheet (2b) and/or another face of the core (3) of reinforcement material, a second step of positioning the second sheet (2b) on the core (3) of reinforcement material, and a step of disassembling the part (1) made of sandwich material, which method is ***characterized by*** the following steps:
- initially making, by thermoforming, both sheets (2a, 2b) made of thermoplastic material which is reinforced or not, and having substantially the same profile,
- initially preparing the flexible core (3) comprising at least one layer of reinforcement material,
- in the first pasting step, positioning the first sheet (2a) on a mould (9) having a shape complementary to the first sheet (2a),
- after the second positioning step, applying a homogeneously distributed and determined stress on the second sheet (2b) in order to produce a mechanical deformation and a forming of the core (3) of reinforcement material,
- maintaining this stress until polymerisation of the glue, and then performing the disassembling step.

2. - The method for manufacturing a part made of sandwich material according to claim 1, **characterised in that** the second sheet (2b) is attached on a backing mould (15) having a shape complementary to the second sheet (2b).

3. - The method for manufacturing a part made of sandwich material according to claim 2, **characterised in that** the second sheet (2b) is made integral with the backing mould (15) by a suction means (17, 18).

4. - The method for manufacturing a part made of sandwich material according to claim 1, **characterised in that** the second sheet (2b) is applied against the core (3) by a pocket (12) in which vacuum is achieved.

5. - The method for manufacturing a part made of sandwich material according to one of claims 1 to 4, **characterised in that** the sheets (2a, 2b) are made by thermoforming-blowing.

6. - A part (1) made of sandwich material manufactured according to the method according to one of the preceding claims and comprising two sheets (2a, 2b) made of a thermoplastic synthetic material separated by a core (3) comprising at least one layer of reinforcement material, the part being ***characterised in that*** the core (3) is a flexible core comprising at least one layer of one of the following materials: metal honeycomb, grooved foam, grooved cork, grooved balsa, spikes linked to a flexible support.

7. - The part made of sandwich material according to claim 6, **characterised in that** each sheet (2a, 2b) comprises a peripheral rim (21, 24), the rim of a sheet (24) nesting into the rim (21) of the other sheet so as to form an edge for the part (1).

8. - The part made of sandwich material according to one of claims 6 or 7, **characterised in that** the core (3) has a thickness between 3 mm and 60 mm.

9. - The part made of sandwich material according to one of claims 6 to 8, **characterised in that** the sheets (2a, 2b) have a thickness between 0.2 mm and 3 mm.

10. - The part made of sandwich material according to one of claims 6 to 9, **characterised in that** the profile of the sheets (2a, 2b) is not planar.
